(19) **Europäisches Patentamt**
**European Patent Office**
**Office européen des brevets**

(11) **EP 3 151 174 A1**

(12) **EUROPEAN PATENT APPLICATION**

(43) Date of publication:
**05.04.2017 Bulletin 2017/14**

(51) Int Cl.:
**G06Q 10/04** *(2012.01)*  **G06Q 50/30** *(2012.01)*

(21) Application number: **16172917.3**

(22) Date of filing: **03.06.2016**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(30) Priority: **02.10.2015 EP 15188213**

(71) Applicant: **NEC EUROPE LTD.
69115 Heidelberg (DE)**

(72) Inventors:
• **Moreira Matias, Luis**
  **69126 Heidelberg (DE)**
• **Khiari, Jihed**
  **69181 Leimen (DE)**
• **Vitor, Vitor**
  **69115 Heidelberg (DE)**
• **Cats, Oded**
  **2316 RB Delft (NL)**

(74) Representative: **Patent- und Rechtsanwälte
Ullrich & Naumann
PartG mbB
Schneidmuehlstrasse 21
69115 Heidelberg (DE)**

(54) **PUBLIC TRANSPORTATION SYSTEM AND METHOD FOR ESTABLISHING AND DEPLOYING SCHEDULES IN SUCH SYSTEM**

(57)  A public transportation system, comprises a plurality of public transport vehicles, wherein a vehicle comprises a location mechanism adapted to communicate said vehicle's positioning to a vehicle location database, a transport network including a given number of routes, each route comprising a route-specific timetable that contains the times public transport vehicles pass at each of said route's stops or stations, a given number of network-wise schedules with non-overlapping temporal coverage, a scheduling component configured to execute an optimization framework, in accordance with given optimization criteria and by using at least vehicles' positioning data stored at said vehicle location database as input, for establishing a schedule plan that includes the number of schedules to be deployed, each schedule's coverage and the timetables for each schedule and each route, and communication means adapted to transmit either the entire schedule plan or schedule plan updates to physical devices contained in a digital subscriber list. Furthermore, a method for performing scheduling in a public transportation system is described.

Fig. 2

EP 3 151 174 A1

**Description**

The present invention generally relates to a public transportation system, as well as to a method for establishing and deploying schedules in a public transportation system.

Public Transport (PT) reliability is a major issue of modern cities. A good operational planning is necessary to deliver such service quality requirements while maintaining a balanced relationship between resource usage and obtained revenues. Schedule Plan (SP) optimization is a traditional problem in public transport and, usually, this process is done by conducting surveys on the passenger demand as well as averages of the round-trip times collected both manually and/or automatically at each route's terminus (for reference, see A. Ceder: "Urban transit scheduling: framework, review and examples", in Journal of Urban Planning and Development 128(4) (2002) 225-244). Consequently, it is slow and expensive due to the manpower involved in its multiple stages (i.e. data collection, analysis and decision making).

However, nowadays, major PT operators have their fleets equipped with Global Positioning System (GPS) antennas, communicational devices (e.g. 3G) and Radio-frequency Identification readers able to communicate the vehicle's positioning (i.e., Automatic Vehicle Location, AVL) and its ridership (i.e., Automatic Passenger Counting, APC) to a central server (for reference, see L. Moreira-Matias, J. Mendes-Moreira, J. Freire de Sousa, J. Gama: "Improving mass transit operations by using avl-based systems: A survey", Intelligent Transportation Systems, IEEE Transactions on 16(4) (Aug 2015) 1636-1653).

To mine this novel source of data is a massive challenge. They contain information about the patterns of human behavior while traveling (as drivers or passengers) on an urban environment. Such patterns can provide useful insights to improve the operational planning of mass transit agencies - namely, its Schedule Plan (SP). Such improvement may bring multiple benefits by providing ways of reducing costs (e.g. fleet (re)sizing or fuel saving due to a decrease of the necessary number of trips) and/or improving the passenger experience.

In view of the above it is therefore an objective of the present invention to improve and further develop a public transportation system and a method for establishing and deploying schedules in a public transportation system in such a way that, given a particular degree of obtained revenues, the required resources, e.g. in terms of fleet size, fuel consumption or the like, are reduced as far as possible.

In accordance with the invention, the aforementioned objective is accomplished by a public transportation system that, comprises

a vehicle location database configured to store positioning data of a plurality of public transport vehicles communicated by said vehicles' location mechanisms,
a transport network including a given number of routes, each route comprising a route-specific timetable that contains the times public transport vehicles pass at each of said route's stops or stations,
a given number of networkwise schedules with certain temporal coverage,
a scheduling component configured to execute an optimization framework, in accordance with given optimization criteria and by using at least vehicles' positioning data stored at said vehicle location database as input, for establishing a schedule plan that includes the number of schedules to be deployed, each schedule's coverage and the timetables for each schedule and each route, and
communication means adapted to transmit either the entire schedule plan or schedule plan updates to physical devices contained in a digital subscriber list.

Furthermore, the above objective is accomplished by a method for establishing and deploying schedules in a public transportation system, wherein the system comprises

a transport network including a given number of routes, each route comprising a route-specific timetable that contains the times public transport vehicles pass at each of said route's stops or stations, and
a given number of networkwise schedules with certain temporal coverage, said method comprising:

executing, by a scheduling component, in accordance with given optimization criteria and by using at least vehicles' positioning data as input, an optimization framework for establishing a schedule plan that includes the number $k$ of schedules to be deployed, each schedule's coverage and the timetables for each schedule and each route, and
transmitting either the entire schedule plan or schedule plan updates to physical devices contained in a digital subscriber list.

According to the invention it has been recognized that the above mentioned objective can be accomplished by a full-scale, data-driven automated optimization and deployment scheme that addresses all of the steps involved in the schedule plan, namely the number of schedules, the schedule coverage and the timetabling, ensuring a higher reliability and efficiency on any scenario. Embodiments of the present invention provide an automated system that - given input data, e.g. Automated Vehicle Location (AVL) and, optionally, Automatic Passenger Counting (APC) data - defines the optimal number of schedules, analyses the (generally non-overlapping) temporal coverage of schedules as well as the timetables, and deploys the resulting schedule updates into proper physical systems. By doing everything (i.e. planning, deployment and distribution to stakeholders) in an integrated framework, passengers and agencies will be approximated on an unprecedented way. Moreover, the system design allows to decide about transmitting to the subscribers list only the effective changes that the schedules suffer, or the entire schedule plan as once. The way the framework according to embodiments of the invention is defined, by defining a reasonable pipeline, it is also possible to incrementally select which is the change scope (i.e. networkwise, routewise or daywise) and to perform only a partial computing of schedules in accordance with the selected change scope. In this case, messages for the transmission of schedule plan updates to the physical devices contained in the digital subscriber list may be adapted to the respective change scope selected. In particular, the message to be injected into a communicational platform for distribution to stakeholders can be shaped accordingly.

According to embodiments, once updated, the schedule plan or the schedule plan updates may be transmitted to the multiple parties being involved, which range from potential passengers to planners, drivers of the public transport vehicles, controllers and other agents involved on agencies operations. Consequently, the devices where such changes will be highlighted may differ along the user types (e.g. smartphones apps for passengers, static screens for controllers, on-board displays for drivers, webpages for planners). In particular, the physical devices and systems to which schedule plan and schedule plan updates are transmitted may include passengers' devices, in particular mobile terminals, transit agencies' control centers/monitors, on-stop digital screens, and/or on-board displays for drivers. According to a feasible implementation it may be provided that the schedule plan (updates) are pushed to these devices via appropriate push messages. Advantageously, by providing a common digital subscribers list to push the abovementioned schedule updates, changes of the schedule plan are efficiently broadcast as fast as possible so both operators and passengers can benefit from the resulting insights of the schedule plan optimization process. Furthermore, by means of an adequate stepwise pruning on which SP changes to be pushed into real systems, the deployable systems are rapidly reachable by both passengers and transportation agencies, which can significantly reduce the number of bytes necessary to broadcast such changes for a larger audience, thus saving communication bandwidth and, ultimately, increase the speed of such communicational task.

According to an embodiment automatic passenger counters are positioned on each of the public transport vehicles, wherein these counters are configured to provide vehicle utilization data, in particular APC (Automatic Passenger Counting) data, to be stored in a passenger count database, which may be implemented at a central server.

According to an embodiment of the scheduling component may be configured to use the vehicle positioning data together with the vehicle utilization data, if and as far as available, for computing the routes' daily profiles to be used by the optimization framework.

According to an embodiment the scheduling component may be further configured to cluster the daily profiles for each of all possible partitions resulting from a predefined set of admissible values for the number $k$ of schedules to be deployed. In particular, this clustering of the daily profiles may be performed by applying a $k$ dependent clustering algorithm that aims at reducing the entropy within samples of the same cluster, while maximizing the entropy among samples of different clusters.

The scheduling component may then determine the most adequate number $k$ of schedules to be deployed based on the computation of a metric that performs a quality assessment of the clusters produced by each possible number of partitions. According to an embodiment this metric may be constructed in such a way that it aims at reducing the entropy between the behavior of the days covered by the same schedule. Furthermore, the metric may be constructed in such a way that it penalizes a high number $k$ of schedules to be deployed.

According to an embodiment the scheduling component may be configured to perform a consensual clustering using the route-based partitions obtained for the most adequate number $k$ of schedules, determined in accordance with the procedure described above. According to an embodiment, based on the schedule coverage resulting from the consensual clustering, the scheduling component may perform an optimization of the timetables for each pair [route, schedule].

There are several ways how to design and further develop the teaching of the present invention in an advantageous way. To this end it is to be referred to the dependent patent claims on the one hand and to the following explanation of preferred embodiments of the invention by way of example, illustrated by the drawing on the other hand. In connection with the explanation of the preferred embodiments of the invention by the aid of the drawing, generally preferred embodiments and further developments of the teaching will be explained. In the drawing

Fig. 1    is a schematic overview providing a high level illustration of the problem underlying embodiments of the present invention,

Fig. 2    is a diagram illustrating components of a public transportation network in accordance with embodiments of the present invention, and

Fig. 3    is a diagram illustrating processing steps in a method for performing scheduling in a public transportation system in accordance with embodiments of the present invention.

Embodiments of the present invention as described hereinafter in detail are basically related to the approach proposed in J. Mendes-Moreira, L. Moreira-Matias, J. Gama, J.F. de Sousa: "Validating the coverage of bus schedules: A machine learning approach", in Information Sciences 293(0) (2015) 299 - 313, where a Schedule Planning (SP) process for a given public transportation route generally relies on two main steps: (1) the first step is to define the number of schedules and their individual coverage. Then, (2) the timetables for each route schedule are constructed containing the time the buses pass at each schedule time point (per trip). While the timetables may be defined routewise (e.g. high/low frequency routes), the number of schedules and their coverage are defined networkwise. Such definition is key to simplify agencies' operations (e.g. maintenance tasks) and, most of all, to facilitate the SP memorization by the passengers.

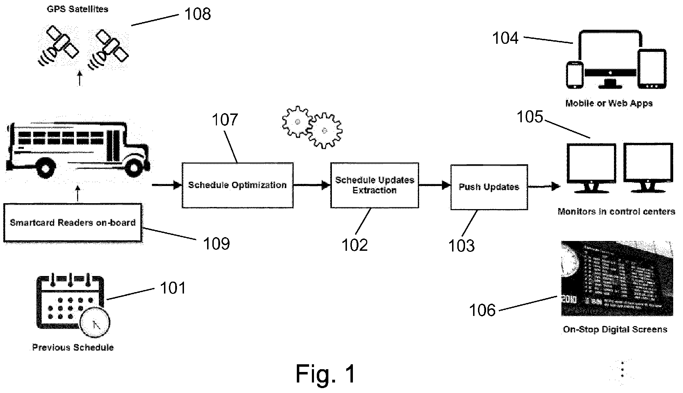

The changes performed on the SP can be faced as updates. Such updates can be as frequent as desired - especially for small changes (e.g. a change of two minutes on a bus departure time). However, one can also conclude large scale changes (e.g. change the number of available schedules). As illustrated in the embodiment shown in Fig. 1, once updated, the schedule updates (in relation to a previous schedule 101) can be extracted (as shown at 102), and the schedule updates can be pushed to its multiple stakeholders, as exemplarily illustrated at 103. These stakeholders range from potential passengers to planners, drivers, controllers and other agents involved on agencies operations. Consequently, the devices where such changes will be highlighted may differ along the user types (e.g. smartphones apps for passengers 104, static screens for controllers 105, on-stop digital screens 106, on-board displays for drivers, webpages for planners, etc.). By providing a common digital subscribers list to push the abovementioned schedule updates, these changes can be efficiently broadcasted as fast as possible so both operators and passengers can benefit from the resulting insights of the schedule plan optimization process, generally indicated at 107. Consequently, the illustrated embodiment provides a solution in two dimensions: (1) schedule plan optimization to compute resulting updates and (2) their diffusion.

With respect to (1), i.e. the schedule plan optimization, it can be noted that most of the automated data driven works on improving an SP in prior art are focused on timetables standalone. However, embodiments of the present invention take into consideration that the coverage definition constrains the timetable construction (e.g. two days with distinct demand peak periods should have different timetables).

The solution described in the above mentioned literature, which provides an improvement of the Schedule Coverage using an automated data driven approach, proposes a consensual clustering framework, which aims at grouping days with similar behavior (computed from AVL data standalone) for an entire network departing from a predefined number of schedules and a set of clustering pieces obtained for singular routes. Consequently, it still requires a considerable input of human expertise to make it work on a real-time setting. It does so because the decision on the number of schedules to be put in place require an analysis of all the clustering pieces obtained for individual routes for a pool of possible solutions, as well as the consensual ones.

One of the problems that are targeted by embodiments of the present invention is the full-scale optimization of the schedule planning (including the number of schedules, their coverage and the timetables defining for each schedule/route) using networkwise AVL/APC data as input. In other words, according to these embodiments both tasks, i.e. coverage optimization and timetable optimization, which in the existing state-of-the-art are traditionally handled as isolated individual problems, are performed together as a pipeline (as indicated in Fig. 1) using both AVL data (obtained by a location mechanism, e.g. GPS satellites 108) and APC data (obtained by a passenger counting mechanism, e.g. on-board smartcard readers 109) simultaneously to achieve an even more reliable schedule.

Moreover, embodiments of the present invention address the problem of automatically optimizing the number of schedules in place using a full data driven approach.

Consequently, embodiments of the present invention relate to a scheduled plan optimization that automatically determines a novel schedule coverage for a given public transportation network using AVL data and optionally, if and as far as available, also APC data. This optimization includes both the definition of the number of schedules and of the daily coverage to be in place in each one of them, which requires an adequate mathematical formulation of all the decision variables which can be taken into account on this specific domain. These formulations may be embedded on adequate unsupervised machine learning algorithms which can bring optimal schedule coverage from the original data on a fully automated way.

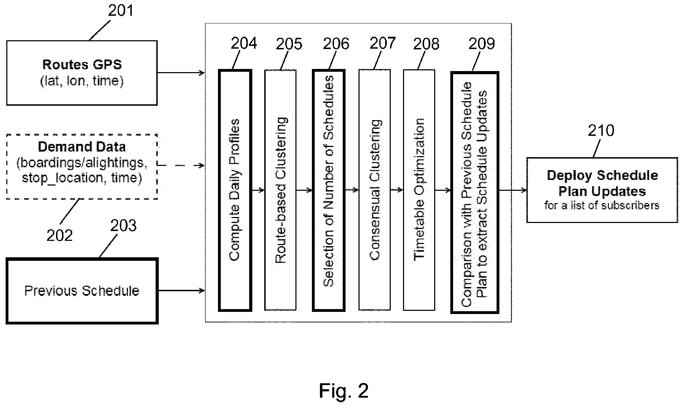

Fig. 2 shows a system diagram of a method for performing scheduling in a public transportation system in accordance with an embodiment of the present invention. As can be obtained from Fig. 2, this method follows a fully-automated multi-step framework designed to optimize the SP process and the respective deployment in a public transportation network.

According to the illustrated embodiment the schedule plan changes resulting from the optimization pipeline are deployed scopewise. By embedding the methodology in an integrated and pruned way, it is possible to rapidly deploy only the necessary changes to the subscribers, promoting the connection between passengers and agencies.

The illustrated embodiment relies on an automated data driven optimization framework for the schedule plan which addresses all the tasks involved in schedule planning: defining the number of schedules, the schedules' coverage as well as the timetables in an integrated way. To achieve this, the best number of schedules has to be defined automatically. To select the most adequate number of schedules to be in place, a specific score may be defined. This score's computation may start by computing an ad-hoc metric to assess the quality of each possible partitioning.

This metric may be designed to take into account four factors of interest in this particular domain: (1) the reliability of the proposed schedule, by minimizing the entropy between the behavior of the days covered by the same schedule; (2) the interpretability of the resulting schedule, by penalizing high numbers of schedules on an exponential manner; (3) the adequacy of the resulting schedules, through a comprehensive assessment of the *frequent pattern* modeled by each of the clusters (e.g. Sundays should be grouped with Saturdays on 40 of 52 weeks of the year), and (4) the noise within such clusters (e.g. if the pattern modeled occupies, or not, a significant part of the cluster where it is defined).

The first factor may be computed using the well-known Bayesian Information Criterion for the selection of an optimal number of clusters from a given finite solution pool.

The second one may be modeled through a penalty term which increases exponentially with the number of provided schedules on the very same finite solution pool.

The third factor may be computed in three stages: firstly, the *frequent pattern* is modeled using a modified version of a sequence mining approach for this particular application - e.g. the PrefixSpan as described in Pei, J., Han, J., Mortazavi-Asl, N., Pinto, H., Chen, Q., Dayal, U., Hsu, M.: "PrefixSpan: Mining sequential patterns efficiently by prefix-projected pattern growth", in: icccn, IEEE (2001) 0215, which is incorporated herein by way of reference - where each week covered by the input data is a transaction of day types (e.g. Monday) covered by such week. This modified version takes into account not only the support of each frequent itemset, but also its mass along the cluster (i.e. the percentage of the cluster's mass that this pattern uses).

Finally, the fourth factor may be modeled as a penalty factor which uses the standard deviation of day types inside each cluster to assess to quantity of noise within.

As a result, the best number of schedules is a rounded version of a weighted mean of each pair (route, number_of_clusters) where the weights are given by the number of trips of each route as well as by the quality of the clusters produced by each possible number of partitions - computed using the abovementioned metric.

The computation of the routes' typical behaviors used on the schedule optimization can be based on both AVL and APC data simultaneously. Embedding APC data aims at expressing the existence of bursty demand peaks/valleys in the computation of each daily profile. Such change will improve the similarity between those profiles and the real world behavior, which will enhance the reliability of the resulting schedule.

The embodiment described hereinafter with reference to Fig. 2 relies on the optional usage of APC data for routes which have such data available in sufficient amounts to construct the daily profiles. The daily profiles are represented by a numerical series where the round-trip times for every trips of a given route on a given day are ordered by their departure times (in the x-axis). However, by using APC data, one can make such daily profiles reflect the existence of demand peaks/valleys to ensure that days that face the same type of patterns will be covered by the same schedule. Such procedure starts by modeling the dwell times to assess the typical constants of this problem (i.e. boarding/alighting time per passenger and dead time at stops) through linear regression fed simultaneously by AVL and APC data. However, the loss function of this linear regression procedure is changed from the typical least squares to the mean absolute deviation. Such change will force that the dwell times computed using the resulting function will overestimate/underestimate the dwell times on the stops affected by such peaks and valleys. The final daily profiles will then be computed by using the sum of all link travel times (the run times between two consecutive stops) with the dwell times obtained by this linear regression procedure. By doing so, the information about these demand peaks will be included as smooth increases/decreases of the round trip times along the daily profiles.

In summary, in accordance with the embodiment of Fig. 2 the complete framework works in a number of different steps including the following: (1) Large scale AVL/APC data collection, i.e. location data, e.g. via GPS (as shown at 201), and demand data, e.g. including boarding/alighting times and dwell times at stops (as shown at 202); (2) previous schedule provision (as shown at 203); (3) Daily Profiles Generation (204); (3) Route-based clustering (205); (4) Network-based selection of the number of clusters (206); (5) Consensual clustering based on the partitioning obtained for each route along with the computed best number of schedules (207); (6) Route-based timetable definition for the number of schedules previously determined (208); (7) Schedule plan updates extraction given the newly defined coverages and timetables and the previous schedule (209); and (8) Deployment of the updated schedule to a list of subscribers (210).

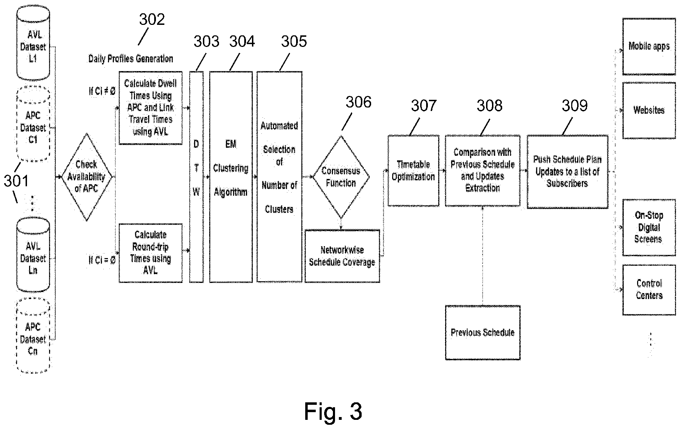

Hereinafter, the technical details of the different steps listed above will be described by making reference to Fig. 3. Before going into details, an overview of the stepwise methodology applied in accordance with the embodiment illustrated in Fig. 3 is given as follows:

The procedure to automatically set both the number of schedules and their daily coverage follows the one described in Section 4 of J. Mendes-Moreira, L. Moreira-Matias, J. Gama, J.F. de Sousa: "Validating the coverage of bus schedules: A machine learning approach", in Information Sciences 293(0) (2015) 299 - 313, which is incorporated herein by way of reference. It elaborates on the principle that days where the route trips have a similar behavior (e.g. round-trip times) throughout the day should be assigned to the same schedule. Let $\mathbb{L} = \{r_1, \ldots, r_n\}$ denote a set of routes of interest. Firstly, for each $r \in \mathbb{L}$, the running times and the boardings/alightings at each stop (if existing) are extracted from its original AVL/APC dataset, as shown at 301. Secondly, at 302, the daily profiles are generated. Based on the APC data available for a specific route, a biased dwell time model may be generated to account demand peaks/valleys. Its output is added to the link travel times computed through the AVL data.

The next two steps, 303 and 304, generate a distance matrix between the days (using their daily profiles) and cluster them. The first task is conducted using Dynamic Time Warping, DTW, while the latter may be addressed using a Gaussian Mixture Model, GMM. Conversely to prior art approaches, the clustering is made for a user-defined set of admissible number of schedules $\mathbb{K} \subset \mathbb{N}$, i.e. $\forall k \in \mathbb{K}$ instead for a single predefined $k$ value. The abovementioned steps are repeated for all routes.

Step 305 selects the best possible $k \in K$ to define the best number of schedules to put in place. This is made using a two-stage process, where an ad-hoc metric is devised to evaluate the clustering result for each pair $(r, k)$, $\forall r \in \mathbb{L}, k \in \mathbb{K}$. Then, a consensual $k$, i.e. $K$ is found through a domain-oriented weighted mean of the previously computed metrics, as described hereinafter in detail. Finally, shown 306, a Consensual Clustering procedure is devised using the clustering pieces obtained for $k = K$ to compute the suggested Schedule Coverage.

Based on the resulting net requires schedule coverage, the timetable is optimized, at 307, and the resulting new schedule is compared with the previous schedule and updates are extracted, as shown at 308. At 309, either the schedule plan updates extracted in the previous step or, as the case may be, the entire new schedule plan is then pushed to a list of subscribers, which may include, but not limited to, mobile apps, websites, on-stop digital screens, control centers, etc.

In the following, the different steps will be described in some more detail:

1) Large scale AVL/APC data collection

Here, the datasets of each route are firstly pruned and then preprocessed to conduct machine learning experiments over them. Firstly, a coverage analysis must be conducted only over a comprehensive amount of data (e.g. 3 months). Consequently, routes that do not provide such amount of data should be excluded from the procedure. Finally, it is also selected if the route will input AVL data standalone or also APC data. To the second case, there must be a comprehensive overlap between the amount of data available on both datasets. Finally, a period is selected which can be shared for all the routes (i.e. 100% overlap) to conduct the schedule optimization procedure.

2) Daily Profiles Generation

The daily profiles are represented by a numerical series where the round-trip times for every trips of a given route on a given day are ordered by their departure times (in the x-axis). However, by using APC data, it is possible to make such daily profiles reflect the existence of demand peaks/valleys to ensure that days that face the same type of patterns will be covered by the same schedule. Such procedure starts by modeling the dwell times to assess the typical constants of this problem (i.e. boarding/alighting time per passenger and dead time at stops) through linear regression fed simultaneously by AVL and APC data. However, the loss function of this linear regression procedure is changed from the typical least squares to the absolute deviation. Such change will force that the dwell times computed using the resulting function will overestimate/underestimate the dwell times on the stops affected by such peaks and valleys. The final daily profiles will then be computed by using the sum of all link travel times (the run times between two consecutive stops) with the dwell times obtained by this linear regression procedure. By doing so, the information about these demand peaks is included as smooth increases/decreases of the round trip times along the daily profiles.

3) Route-based Distance Matrix computation

In this step, the Dynamic Time Warping (DTW) - for reference, see Chu, S., Keogh, E., Hart, D., Pazzani, M., et al.: "Iterative deepening dynamic time warping for time series", in Second SIAM International Conference on Data Mining (SDM-02), 2002 - is used as metric to compute a quadratic distance matrix between all the days covered by the input data. The main reason to do it so is because not all days have the same number of trips. Consequently, they will produce irregularly spaced series which cannot be comparable using standard approaches to this problem (i.e. Euclidean distance).

### 4) Route-based Clustering

This step aims to find the best schedule coverage for each route regarding a previously defined pool of possible number of schedules. It does it so by employing any *k*-dependent clustering algorithm aiming to reduce the entropy within samples of the same cluster while maximizing the entropy among samples of different clusters.

### 5) Selection of the number of Schedules

The selection of the number of schedules relies on a score to select the most adequate number of schedules to be in place. This score's computation starts by computing an ad-hoc metric, denoted $m(k, r)$ hereinafter (where $k \in \mathbb{K}$ denotes the number of schedules, with $\mathbb{K}$ specifying a user-defined set of admissible number of schedules, and $r \in \mathbb{L}$ denotes the routes, with $\mathbb{L} = \{r_1, \ldots, r_n\}$ specifying a set of routes of interest), to assess the quality of each possible partitioning. The ad-hoc metric $m(k, r)$ is devised to evaluate the clustering result for each pair $(r, k)$, $\forall r \in \mathbb{L}, k \in \mathbb{K}$.

As already mentioned earlier, this metric $m(k, r)$ may take into account four factors of interest in this particular domain: (1) the reliability of the proposed schedule (by minimizing the entropy between the behavior of the days covered by the same schedule; (2) the interpretability of the resulting schedule, by penalizing high number of schedules on an exponential manner; (3) the adequacy of the resulting schedules, through a comprehensive assessment of the *frequent pattern* modeled by each clusters (e.g. Sundays should be grouped with Saturdays on 40 of 52 weeks of the year) and (4) the noise within such clusters (e.g. if the pattern modeled occupies, or not, a significant part of the cluster where it is defined).

For instance, the ad-hoc metric $m(k, r)$ can generally be expressed as follows:

$$m(k, r) = \left( nbic(k, r) - f(k, r)^2 \right) + \left( q(k, r) - \hat{\sigma}(k, r) \right), k \in \mathbb{K}, r \in \mathbb{L}$$

where *nbic* $(k, r)$ is a normalized value of BIC (Bayesian Information Criterion), which computes an entropy-based probabilistic score that, when maximized over a set of values, i.e. $\mathbb{K}$, aims to return the optimal *k* regarding the generation of homogeneous clusters (by minimizing the entropy between samples of the same cluster and maximizing the one between samples of different clusters).

The first term of the above equation addresses the number of clusters. High values of *nbic* will bring a gain on the punctuality of a suitable timetable defined for such partitioning. On the other hand, the increase of the number of schedules to maximize such punctuality must be done if and only if such gain is significant. Consequently, one needs to model a trade-off between an eventual gain given by increasing the number of schedules and the associated cost on decreasing its interpretability. This can be done by introducing penalty term $f(k, r)^2$ that favors lower values of *k,* where

$f(k, r) = k / max (\mathbb{K}), \forall r \in \mathbb{L}.$

The second term of the above equation addresses ashe cohesion and consistency of the partitioning for a number of schedules *k*. Empirically, it is known that a SP in PT should cover a static set of daytypes (e.g. Mondays) throughout a relatively long set of weeks. Consequently, a suitable cluster would be one that provides such *frequent pattern.* The suitability of each cluster is given by an ad-hoc quality metric, i.e. $q(k,r)$, which may be computed in two stages: (a) frequent itemset mining and (b) compatible pattern merging. This procedure is detailed as follows.

### 6) Consensual Clustering to Define Network-Based Schedule Coverages

Given the best number of schedules computed by the previous step, a consensual clustering is computed using a consensus clustering framework for the partitioning obtained to each route. For instance, as the consensus clustering framework the one suggested by Monti, S., Tamayo, P., Mesirov, J., Golub, T.: "Consensus clustering: A resampling-based method for class discovery and visualization of gene expression microarray data", in Machine Learning 52(1) (2003) 91-118, which is incorporated herein by way of reference, may be employed.

A *frequent pattern* in this problem can be modeled through a sequence mining problem to find frequent itemsets of daytypes among the weeks (i.e. transactions) covered by the input data (e.g. Mondays to Fridays). Let $y$, $\Phi \in [0, 1]$ denote two user-defined parameters for the minimum support to consider a given itemset as frequent (i.e. the minimum amount of weeks to define a schedule) and for the minimum cluster's mass ratio to be covered by it, respectively. The above-mentioned PrefixSpan algorithm can hereby be adopted to find such frequent itemsets, i.e. *FIj* among the daytype's transactions obtained from each partition $S_i$. Let $N$ denote the number of weeks in the input data. The *freguent pattern* of each cluster, i.e. *FP* is then selected as follows:

$$FP_i = \arg\max_{FI_i \subseteq S_i} \left( \frac{\Gamma(FI_i) \cdot |FI_i|}{N} \right) \text{ subject to: } \Gamma(FI_i) \geq \gamma, FP_i \geq \phi$$

where $\Gamma(FI_i)$ is the support of the frequent itemset $FI_i$ on the partition $S_i$.

After such procedure, each cluster possesses a $FP_i$ (which may be Ø). The quality of each cluster is then computed as

$$q(k, r) = \sum_{i=1}^{k} \frac{\Gamma(FP_i)}{k}$$

However, in this domain, it is very common to find complementary schedules (e.g. workdays for all year and workdays during summer vacations, with a support of 0.9 and 0.1, respectively). Together, these complementary clusters would present a very meaningful *frequent pattern* which is penalized by the $q(k, r)$ computation formula introduced above. Consequently, a merging step may be introduced which aims to find such clusters and to merge them in order to obtain the overall quality of the coverage proposed by a given value of $k$. This merging step aims to find clusters which have frequent itemsets complementary to a given $FP_i$ by relaxing, at most, one of the two constraints imposed in the above equation for $FP_i$. The following merging procedure for complementary clusters/coverages may be employed to do it so (here, it should be noted that two clusters are considered as complementary if they overlap, at most, 10% of the weeks of the input data):

```
1: function MERGING-COMP(k, γ, φ, S)
2:     k' ← k;
3:     for (i in {1, ..., k'}) do
4:         if (FPᵢ ≠ Ø ∧ Γ(FPᵢ) < 1) then
5:             for (j in {1, ..., k'}) do
6:                 if (j ≠ i ∧ (∃ cFI = FIⱼ ⊆ FPᵢ : FIⱼ(γ = 0) ∨ FIⱼ(φ = 0))) then
7:                     if AreCoveringComplementaryPeriods?(Sᵢ, Sⱼ) then
8:                         Sᵢ ← Sᵢ ∪ Sⱼ; Sⱼ ← Ø; k' ← k' - 1;
9:                         return Merging-Comp(k', γ, φ, S);
10:                    end if
11:                end for
12:        end for
13:    return {k', S};
14: end function
```

Given the resulting clusters after the merging procedure (with a number of *k'* clusters), the final cluster's quality can be computed as

$$q(k,r) = \begin{cases} \sum_{i=1}^{k'} \frac{\Gamma(FP_i)}{k'} \text{ if } & k' = k \\ \left( \sum_{i=1}^{k'} \frac{\Gamma(FP_i)}{k'} \right)^{\left(1 - \frac{\chi}{2}\right)}, \chi = \max(FPM_i) \text{ otherwise.} \end{cases}$$

where $FPM_i$ denotes the support of the frequent itemset of a merged cluster.

As will be easily appreciated by those skilled in the art, the resulting clusters may also contain other samples regarding daytypes not included in the frequent itemset (e.g. a cluster modeling the weekends which have two Mondays within). These samples are referred to as *noise* in this context. Such *noise* naturally decreases the adequacy of the frequent pattern modeled by each cluster. This effect is introduced by term $\sigma^\wedge(k, r)$ in the above equation for ad-hoc metric $m(k, r)$. The term $\sigma^\wedge(k, r)$ is calculated based on the standard deviation between the relative frequencies of every day within a particular cluster. It can be computed as:

$$\hat{\sigma}(k,r) = \frac{1}{2} \times \sqrt{\sum_{i=1}^{k} \frac{\sigma(fr_{k,S_i,r})}{k}}$$

where $fr_{k,Si,r}$ is the vector of relative frequencies of the days within the cluster *i,* where a relative frequency of a daytype *d* within a cluster $S_i$ is given by the number of days of daytype d divided by the cluster's mass.

Given such metric computation for all pairs $(r, k)$, one can now compute a consensual number of clusters $K$. Let $\eta(r)$ denote the normalized number of trips for the route $r$. The consensual number of clusters $K$ can be defined by a weighted average of $k \in \mathbb{K},$ and $K$ can be expressed as follows:

$$\sum_{r \in \mathbb{L}} \sum_{k \in \mathbb{K}} \frac{m(k,r)^2 \times k \times \eta(r)}{\Psi} \Big/ \sum_{r \in \mathbb{L}} \eta(r), \Psi = \sum_{k \in \mathbb{K}} m(k,r)^2$$

Finally, as $K \in \mathbb{N},$ the result of the above equation needs to be rounded before usage.

7) Route-based Timetabling Optimization

Using the available AVL and APC data, it is expected to have a timetabling optimization component in place (e.g. the one proposed by Mazloumi, E., Mesbah, M., Ceder, A., Moridpour, S., Currie, G.: "Efficient transit schedule design of timing points", in Transportation Research Part B: Methodological 46(1) (2012) 217-234, which is incorporated herein by way of reference, and which uses Genetic Algorithms and Ant Colonies that determine the optimal slack time and round-trip time, respectively). This process is repeated for all the routes considering the number of schedules determined in 5).

8) Schedule Update

Given the schedule coverage and the timetable definition, a new schedule plan will be obtained. Afterwards, this new schedule plan is subject to comparison with the schedule in place to extract schedule updates. The computation of such updates can be pruned by the results of the different previous steps (5, 6, and 7).

9) Deploy Schedule to a list of subscribers

If any changes should be performed in the schedule plan, concerning the schedule coverage, the timetables or both, an updated schedule (partial or fully) is deployed to a list of subscribers that are relevant, e.g. the transit agencies operators as well as the passengers'. Such end users may receive such information in multiple devices, e.g. mobile apps, websites, monitors at bus stops and in buses, etc.

Many modifications and other embodiments of the invention set forth herein will come to mind the one skilled in the art to which the invention pertains having the benefit of the teachings presented in the foregoing description and the associated drawings. Therefore, it is to be understood that the invention is not to be limited to the specific embodiments disclosed and that modifications and other embodiments are intended to be included within the scope of the appended claims. Although specific terms are employed herein, they are used in a generic and descriptive sense only and not for purposes of limitation.

**Claims**

1. Public transportation system, comprising:

   a vehicle location database configured to store positioning data of a plurality of public transport vehicles communicated by said vehicles' location mechanisms,
   a transport network including a given number of routes, each route comprising a route-specific timetable that contains the times public transport vehicles pass at each of said route's stops or stations,
   a given number of networkwise schedules with certain temporal coverage,
   a scheduling component configured to execute an optimization framework, in accordance with given optimization criteria and by using at least vehicles' positioning data stored at said vehicle location database as input, for establishing a schedule plan that includes the number of schedules to be deployed, each schedule's coverage and the timetables for each schedule and each route, and
   communication means adapted to transmit either the entire schedule plan or schedule plan updates to physical devices contained in a digital subscriber list.

2. System according to claim 1, wherein said physical devices include passengers' mobile terminals, transit agencies' control monitors, on-stop digital screens, and/or on-board displays.

3. System according to claim 1 or 2, wherein automatic passenger counters are positioned on each of said public transport vehicles, said counters providing vehicle utilization data to be stored in a passenger count database.

4. System according to any of claims 1 to 3, wherein said scheduling component is configured to use said vehicle positioning data together with said vehicle utilization data for computing the routes' daily profiles to be used by said optimization framework.

5. System according to any of claims 1 to 4, wherein said scheduling component is configured to cluster routes' daily profiles for each of all possible partitions resulting from a predefined set of admissible values for the number $k$ of schedules to be deployed, and to determine the most adequate number $k$ of schedules to be deployed based on the computation of a metric that performs a quality assessment of the clusters produced by each possible number of partitions.

6. Method for establishing and deploying schedules in a public transportation system, in particular a public transportation system according to any of claims 1 to 5, wherein the system comprises
   a transport network including a given number of routes, each route comprising a route-specific timetable that contains the times public transport vehicles pass at each of said route's stops or stations, and
   a given number of networkwise schedules with certain temporal coverage, said method comprising:

   executing, by a scheduling component, in accordance with given optimization criteria and by using at least vehicles' positioning data as input, an optimization framework for establishing a schedule plan that includes the number $k$ of schedules to be deployed, each schedule's coverage and the timetables for each schedule and each route, and
   transmitting either the entire schedule plan or schedule plan updates to physical devices contained in a digital subscriber list.

7. Method according to claim 6, wherein said scheduling component determines partial schedule plan updates in accordance with a selected change scope, including at least a networkwise, a routewise and a daywise change scope.

8. Method according to claim 7, wherein messages for the transmission of schedule plan updates to the physical devices contained in said digital subscriber list are adapted to the respective change scope selected.

9. Method according to any of claims 6 to 8, wherein said scheduling component computes the routes' daily profiles to be used by said optimization framework.

10. Method according to claim 9, wherein the computation of said daily profiles is performed by using both vehicle positioning data and vehicle utilization data.

11. Method according to any of claims 6 to 10, wherein said scheduling component clusters routes' daily profiles for each of all possible partitions resulting from a predefined set of admissible values for the number $k$ of schedules to be deployed.

12. Method according to claim 11, wherein the clustering of said daily profiles is performed by applying a $k$ dependent clustering algorithm that aims at reducing the entropy within samples of the same cluster, while maximizing the entropy among samples of different clusters.

13. Method according to claim 11 or 12, wherein said scheduling component determines the most adequate number $k$ of schedules to be deployed based on the computation of a metric that performs a quality assessment of the clusters produced by each possible number of partitions.

14. Method according to claim 13, wherein said metric is constructed in such a way that it aims at reducing the entropy between the behavior of the days covered by the same schedule, and/or
wherein said metric is constructed in such a way that it penalizes a high number $k$ of schedules to be deployed.

15. Method according to claim 13 or 14, wherein said scheduling component performs a consensual clustering using the route-based partitions obtained for said most adequate number $k$ of schedules,
wherein said scheduling component, based on the schedule coverage resulting from said consensual clustering, may perform an optimization of the timetables for each pair [route, schedule].

Fig. 1

201

**Routes GPS**
(lat, lon, time)

- - - - - - - - - - - - - - -
**Demand Data**
(boardings/alightings,
stop_location, time)
- - - - - - - - - - - - - - -

202      203

Previous Schedule

204   205   206   207   208   209

Compute Daily Profiles

Route-based Clustering

Selection of Number of Schedules

Consensual Clustering

Timetable Optimization

Comparison with Previous Schedule
Plan to extract Schedule Updates

210

**Deploy Schedule
Plan Updates**
for a list of subscribers

Fig. 2

Fig. 3

Europäisches
Patentamt

European
Patent Office

Office européen
des brevets

## EUROPEAN SEARCH REPORT

**Application Number**

EP 16 17 2917

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,D | LUIS MOREIRA-MATIAS ET AL: "Improving Mass Transit Operations by Using AVL-Based Systems: A Survey", IEEE TRANSACTIONS ON INTELLIGENT TRANSPORTATION SYSTEMS, vol. 16, no. 4, 1 August 2015 (2015-08-01), pages 1636-1653, XP055327959, Piscataway, NJ, USA ISSN: 1524-9050, DOI: 10.1109/TITS.2014.2376772 * the whole document * | 1-15 | INV. G06Q10/04 G06Q50/30 |
| X | US 2008/027772 A1 (GERNEGA BORIS [CA] ET AL) 31 January 2008 (2008-01-31) * abstract * * figures 1-7 * * paragraph [0001] - paragraph [0039] * * paragraph [0049] - paragraph [0121] * * claims 1-2 * | 1-15 | |
| X | US 2010/185486 A1 (BARKER MELANIE R [US] ET AL) 22 July 2010 (2010-07-22) * abstract * * figures 1-7 * * paragraph [0001] - paragraph [0011] * * paragraph [0019] - paragraph [0095] * * claims 1-20 * | 1-15 | TECHNICAL FIELDS SEARCHED (IPC)<br><br>G06Q |

The present search report has been drawn up for all claims

| Place of search | Date of completion of the search | Examiner |
|---|---|---|
| The Hague | 12 December 2016 | Bassanini, Anna |

EPO FORM 1503 03.82 (P04C01)

## ANNEX TO THE EUROPEAN SEARCH REPORT
## ON EUROPEAN PATENT APPLICATION NO.

EP 16 17 2917

This annex lists the patent family members relating to the patent documents cited in the above-mentioned European search report.
The members are as contained in the European Patent Office EDP file on
The European Patent Office is in no way liable for these particulars which are merely given for the purpose of information.

12-12-2016

| Patent document cited in search report | Publication date | Patent family member(s) | Publication date |
|---|---|---|---|
| US 2008027772 A1 | 31-01-2008 | CA 2554651 A1<br>US 2008027772 A1 | 31-01-2008<br>31-01-2008 |
| US 2010185486 A1 | 22-07-2010 | NONE | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **A. CEDER.** Urban transit scheduling: framework, review and examples. *Journal of Urban Planning and Development,* 2002, vol. 128 (4), 225-244
- **L. MOREIRA-MATIAS ; J. MENDES-MOREIRA ; J. FREIRE DE SOUSA ; J. GAMA.** Improving mass transit operations by using avl-based systems: A survey. *Intelligent Transportation Systems, IEEE Transactions,* August 2015, vol. 16 (4), 1636-1653
- **J. MENDES-MOREIRA ; L. MOREIRA-MATIAS ; J. GAMA ; J.F. DE SOUSA.** Validating the coverage of bus schedules: A machine learning approach. *Information Sciences,* 2015, vol. 293 (0), 299-313
- PrefixSpan: Mining sequential patterns efficiently by prefix-projected pattern growth. **PEI, J. ; HAN, J. ; MORTAZAVI-ASL, N. ; PINTO, H. ; CHEN, Q. ; DAYAL, U. ; HSU, M.** icccn. IEEE, 2001, 0215

- **CHU, S. ; KEOGH, E. ; HART, D. ; PAZZANI, M. et al.** Iterative deepening dynamic time warping for time series. *Second SIAM International Conference on Data Mining (SDM-02),* 2002
- **MONTI, S. ; TAMAYO, P. ; MESIROV, J. ; GOLUB, T.** Consensus clustering: A resampling-based method for class discovery and visualization of gene expression microarray data. *Machine Learning,* 2003, vol. 52 (1), 91-118
- **MAZLOUMI, E. ; MESBAH, M. ; CEDER, A. ; MORIDPOUR, S. ; CURRIE, G.** Efficient transit schedule design of timing points. *Transportation Research Part B: Methodological,* 2012, vol. 46 (1), 217-234